# EUROPEAN PATENT SPECIFICATION

(11) **EP 0 333 408 B1**
(45) Date of publication and mention of the grant of the patent: **24.08.1994**
(21) Application number: 89302450.5
(22) Date of filing: 13.03.1989
(51) Int. Cl.: C08L 77/00

(54) **A polyamide resin composition and a shaped article of it**
Polyamidharzmischung und daraus geformte Gegenstände
Composition de résine polyamide et articles formé à partir de cette résine

(30) Priority: 17.03.1988 JP 61992/88
(43) Date of publication of application: 20.09.1989
(73) Proprietor: TORAY INDUSTRIES, INC., Tokyo (JP)
(72) Inventor: Terashima, Takeshi, Nagoya-shi Aichi-ken (JP); Nomura, Toshimi, Chita-shi Aichi-ken (JP)
(74) Representative: Sturt, Clifford Mark

(56) References cited:
- EP-A- 0 129 825
- EP-A- 0 192 264
- EP-A- 0 237 948
- PATENT ABSTRACTS OF JAPAN, vol. 6, no. 165 (C-121)[1043], 28th August 1982;& JP-A-57 80 449

## Description

The present invention relates to a polyamide resin composition and a shaped article thereof, which have excellent properties such as thermal resistance, heating-cooling repeat resistance, rigidity, toughness, and road antifreezing agent resistance.

Recently, polyamide resins have been used to produce automobile parts such as for example cooling fans, tops and a bases of radiator tanks, tops and bases of heater core tanks, cylinder head covers, canisters, gears, connectors, valves, oil pans, brake tubes, fuel tubing, and parts for exhaust gases. This is because the polyamide resins have excellent properties such as heat resistance, oil resistance, moldability, rigidity and toughness.

Higher polyamide resins represented by nylon 11 and nylon 12 among polyamide resins have not only good properties such as a toughness, dimensional stability and chemical agent resistance but also an excellent resistance to road antifreezing agents such as calcium chloride and magnesium chloride. Therefore they have aroused interest in their use as materials for automobile parts and they have already been used for some such parts.

However, an extension of the uses for the higher nylons is limited because of insufficient thermal resistance and rigidity in comparison with metals.

On the other hand, since polyamides having comparatively high amide group concentration, such as nylon 6 and nylon 66, have a high thermal resistance, a high toughness and are inexpensive, they have been used as materials for automobile parts. However, these materials are not necessarily satisfactory because they have defects such as a high hydroscopicity and a poor dimensional stability, and they are attacked by road antifreezing agents such as calcium chloride, magnesium chloride which causes them to crack.

It is known to mix a lower polyamide such as nylon 6, nylon 66, etc. and a higher polyamide such as nylon 11, nylon 12, etc. (Japanese Patent Application Kokai Publication Nos. 57-212252, 57-80448 and 57-80449).

The blends of the lower polyamide and the higher polyamide considerably reduce the defects of the individual polyamides, but they also have a poor heat resistance due to the higher polyamide having a lower melting point. Furthermore, the blends are insufficient in so-called heating-cooling repeat resistance, and they are insufficient in their resistance to calcium chloride under conditions such as repetitive heating-cooling.

Also automobile parts are required to resist high engine temperatures, to resist repetitive radiator heating-cooling and to be resistant to cracking caused by a halogenated metal such as calcium chloride which is spread on the road as a road antifreezing agent. Still further, the automobile parts have to be excellent in rigidity, toughness and dimensional stability.

An object of the present invention is to provide a polyamide resin composition having excellent properties such as thermal resistance, heating and cooling repeating resistance, rigidity, toughness, and road antifreezing agent resistance.

Another object of the present invention is to provide a polyamide resin shaped article suitable for automobile parts, and especially exterior automobile parts.

Accordingly, the present invention provides a polyamide resin composition comprising:
(a) 5 to 65% by weight of at least one polyamide resin selected from a polyamide having caproamide units, a polyamide having hexamethylene adipamide units and a polyamide having aromatic rings;
(b) 65 to 30% by weight of a higher polyamide resin which is obtained by melt polymerisation of at least one compound selected from an aliphatic amino acid having 11 or 12 carbon atoms, a lactam having 11 or 12 carbon atoms and an equivalent salt having 13 to 24 carbon atoms formed from an aliphatic diamine having 6 to 12 carbon atoms and an aliphatic dicarboxylic acid having 6 to 12 carbon atoms;
(c) 30 to 5% by weight of a polyphenylene oxide represented by formula I, or a modified polyphenylene oxide produced by graft-polymerisation of a polyphenylene oxide of formula I with a compound having an active group, or produced by co-polymerising a polyphenylene oxide of formula I with a minor amount of another polymer; 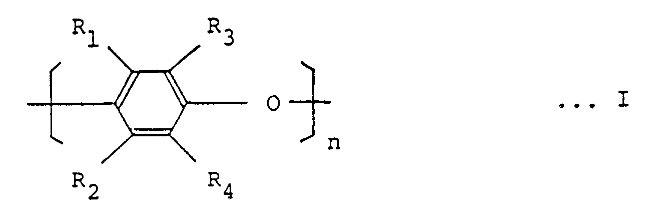 wherein each of R₁ to R₄ is hydrogen or an alkyl group having 1 to 4 carbon atoms, and
(d) 1 to 200 parts by weight of an inorganic reinforcement per 100 parts by weight of the mixture of components (a), (b)and (c).

The present invention also provides a shaped article composed of the polyamide resin composition of the invention. The shaped article is preferably in the form of a part for an automobile, especially those parts which are subjected to repeated heating-cooling and/or road antifreezing agents.

The polyamide having aromatic rings in the component (a) of the polyamide resin composition of the present invention may be selected from an aromatic polyamide, a salt formed from an aliphatic diamine with an aromatic dicarboxylic acid, a copolymer of an aliphatic polyamide and an aromatic polyamide, and a copolymer of an aliphatic polyamide and a polyamide having an aromatic ring. The number of carbon atoms is preferably 4 to 8 and 6 is the most preferred. As the aliphatic polyamide, nylon 4, nylon 6, nylon 46 or nylon 66 are preferred. Nylon 6 or nylon 66 are the most preferred. As the aromatic polyamide terephthalic acid or isophthalic acid are preferred.

Typical aromatic polyamides that can be used are poly(p-phenylene terephthalamide) or poly(p-phenylene isophthalamide).

Typical aromatic ring involved-polyamides that can be used are polyhexamethylene terephthalamide (nylon 6T, T represents terephthalic acid), nylon 6I (I represents isophthalic acid), nylon 4T or nylon 4I.

Typical copolyamide that can be used are nylon 66/6T (mark / represents copolymerisation), nylon 66/6I, nylon 6/6T, nylon 6/6I, nylon 46/6T, nylon 46/6I and so on.

Representative examples of the polyamide used as component (b) in the present invention include those obtained by melt polymerisation of at least one member selected from an aliphatic diamine having 6-12 carbon atoms such as 11-aminoundecanoic acid, 12-aminododecanoic acid, ω-laurolactam, and equimolar salts of hexamethylenediamine, undecamethylenediamine, dodecamethylenediamine or 2,2,4-/2,4,4-trimethyl-hexamethylenediamine with an aliphatic dicarboxylic acid having 6-12 carbon atoms such as adipic acid, azelaic acid, sebacic acid or dodecanedioic acid (except for an equimolar salt of hexamethylenediamine with adipic acid), such as nylon 11, nylon 12, nylon 6.9, nylon 6.10, nylon 6.12, nylon 11.6, nylon 11.12, nylon 12.6, nylon 12.10, nylon 12.12, and copolymers containing the same as the main constituent component. The degrees of polymerisation of the polyamides having a relative viscosity of 2.0 to 6.0 can be arbitrarily chosen.

The polyphenylene oxide (PPO) used as component (c) in the present invention and as defined above by formula (I) is such that the degree of polymerisation, n, is not especially limited.

Examples of the inorganic reinforcement to be used in the present invention include glass fibre, asbestos fibre, carbon fibre, wollastonite, talc, calcium carbonate, magnesium oxide, alumina, mica, spherical glass, potassium titanate whiskers, kaolinite and clay.

The polyamide resin composition of the present invention is composed of a material prepared by mixing 5 to 65%, preferably 25 to 55% by weight of the polyamide component (a), 65 to 30%, preferably 55 to 40% by weight of the polyamide component (b), 30 to 5%, preferably 20 to 5% by weight of the polyphenyleneoxide component (c), and 1 to 200 parts by weight of the inorganic reinforcement per 100 parts by weight of the mixture of (a) to (c).

When a proportion of the polyamide component (a), e.g. nylon 6, nylon 66 and polyamide having an aromatic ring, in the total polymer composition is less than 5 weight %, then a shaped article having a high thermal resistance and a high rigidity cannot be obtained.

On the other hand, when the proportion of the polyamide component (a) in the total polymer composition exceeds 65 weight %, it is not practical because the heating-cooling repeat resistance, the road antifreezing agent resistance of the shaped article, for example of the automobile parts noticeably deteriorate.

When a proportion of the polyamide component (b), i.e. the higher polyamide such as nylon 6.10, nylon 6.12, nylon 11, nylon 12 and so on, in the total polymer composition exceeds 65 weight %, then a shaped article having a high thermal resistance, a high rigidity and a high toughness cannot be obtained.

On the other hand, when a proportion of the polyamide component (b) in the total polymer composition is less than 30 weight %, it is not practical because the heating-cooling repeat resistance, the road antifreezing agent resistance and the dimensional stability noticeably deteriorate.

The PPO component (c) is essential in the present invention to obtain a shaped article having excellent properties.

When a proportion of the PPO component (c) in the total polymer composition exceeds 30 weight %, then a shaped article having a high thermal resistance and a high rigidity cannot be obtained, and moulding processability for obtaining automobile parts deteriorates.

On the other hand, when the proportion of the PPO component (c) in the total polymer composition is less than 5 weight %, a shaped article having a high heating-cooling repeat resistance, a high road antifreezing agent resistance and a high dimensional stability cannot be obtained.

When the amount of the inorganic reinforcement exceeds 200 parts by weight per 100 parts by weight of the mixture of components (a), (b) and (c), it is not favourable because the toughness of the resulting automobile part is reduced and the automobile parts become brittle and unsuitable.

The method of mixing the polyamides and the PPO with the inorganic reinforcing material is not particularly limited and any known method can be employed.

For example, any one of the following three methods may be employed: (a) melt-kneading a mixture by an extruder having the capability to provide sufficient kneading after pellets, powders, small pieces, or the like of at least two kinds of polyamides with PPO are homogeneously mixed with an inorganic reinforcement by a high-speed agitator, (b) melt-kneading a mixture of pellets, which are obtained by melt-kneading polyamides and PPO and (c) inorganic reinforcement and a dry blend injection moulding or extrusion moulding.

The shaped article in the present invention may be formed by known moulding methods for thermoplastic resins such as injection moulding, extrusion moulding, blow moulding, transfer moulding and vacuum moulding.

The shaped article in the present invention may advantageously be an exterior part of an automobile because of the high calcium chloride resistance and the high crack resistance. The exterior part of the automobile may be one which is located in the automobile engine compartment or which is located directly on the automobile.

The automobile exterior parts may be heated by the heat of the engine and cooled by contact with the atmosphere when the engine stops. In the winter or in the cold countries, a mixture of a road antifreezing agent such as calcium chloride or magnesium chloride with snow may get sprayed onto surfaces of these automobile exterior parts.

Typical examples of the automobile exterior parts are cooling fans, radiator tanks, heater core tanks, cylinder head covers, canisters, oil pans, gears, valves, tubes, and pipes.

If desired, the shaped article of the present invention can be subjected to secondary processing such as coating, vacuum evaporation and deposition, or bonding.

Other components such as pigments, dyes, thermal resistance agents, antioxidizing agents, weathering agents, lubricants, or nucleating agents may be incorporated into the polyamide resin composition, providing it does not spoil the modability and physical properties of the polyamide resin composition.

The following Examples will illustrate the present invention in more detail.

The physical properties of automobile parts and corresponding specimens as described in the Examples and the Comparative Examples were measured or evaluated according to the following methods:
(1) relative viscosity: JIS K6810
(2) water absorption: ASTM D570
(3) tensile properties: ASTM D638
(4) flexural properties: ASTM D790
(5) Izod impact strength: ASTM D256
(6) heat distortion temperature: ASTM D648
(7) road antifreezing agent resistance:
   After an injection moulding is treated with warm water at 80°C for 24 hours, a 5% aqueous solution of calcium chloride is coated onto all surfaces of the moulding for one hour, and then another moulding thus coated is placed in a Geer's oven for one hour at 100°C, then left at -30°C for one hour, and then at room temperature for 30 minutes.
   The treatment of heating and cooling, and the treatment of coating with calcium chloride aqueous solution is counted as one cycle. The number of cycles is counted until the moulding crazes.

### Example 1:

40% by weight of nylon 66 having a relative viscosity of 2.8, 50% by weight of nylon 6.10 having a relative viscosity of 2.6 and 10% by weight of poly(2,6-dimethyl-1 ,4-phenylene ether) having a relative viscosity of 0.48 were mixed. Then 55 parts by weight of chopped strands of glass fibre were added into 100 parts by weight of the mixture. The mixture was blended homogeneously by a stirrer, and then the blend was melt kneaded and pelletised by an extruder having a 65mm cylinder diameter.

The obtained pellets were dried under vacuum and then formed into a top of an automobile heater core tank and ASTM No. 1 dumb-bell specimens with an injection moulding machine at a cylinder temperature of 280°C and at a mould temperature of 80°C. The measured physical properties of the obtained specimens, which were absolutely dried, were as follows, proving that as mouldings they were well balanced in thermal resistance, rigidity, toughness, and the like.

| | |
|---|---|
| tensile strength | 186 Mpa (1,900,kg/cm²) |
| flexural strength | 275 Mpa (2,800 kg/cm²) |
| flexural modulus of elasticity | 8920 Mpa (91,000 kg/cm²) |
| Izod impact strength | 127 J/m (13 kg.cm/cm) notched |
| heat distortion temperature | 225°C |
| water absorption | 0.7% |

The moulded top of a heater core tank was subjected to a cycle test for calcium chloride resistance as described above. No crazing was observed until 60 cycles, thus confirming that the moulded top of the heater core tank was an automobile part having an excellent resistance to road antifreezing agents.

### Comparative Example 1:

The calcium chloride resistance of a top of a heater core tank obtained by moulding a mixture of 100 parts by weight of nylon 66 and 55 parts by weight of a glass fibre as used in Example 1 under the same conditions as those of Example 1 was evaluated. Crazing occurred over the whole surface of the moulding after only one cycle.

### Comparative Example 2:

The calcium chloride resistance of a top of a heater core tank obtained by moulding a blend consisting of 100 parts by weight of mixture of 50% by weight of nylon 66 and 50% by weight of nylon 6.10, and 100 parts by weight of glass fibre as used in Example 1 under the same conditions as those of Example 1 was evaluated. Crazing occurred over the whole surface of the moulding after 9 cycles.

### Comparative Example 3:

The toughness, thermal resistance and calcium chloride resistance of ASTM No. 1 dumb-bell specimens and a top of a heater core tank obtained by moulding a mixture of 70% by weight of nylon 66, 27% by weight of nylon 6.10 and 3% by weight of poly(2,6-dimethyl-1,4-phenylene ether) and additionally 55 parts by a glass fibre which is added into 100 parts by weight of the mixture, under the same conditions as those of Example 1, were evaluated. Toughness and thermal resistance were high as shown below but as to calcium chloride resistance, crazing occurred over the surface of the moulding after 3 cycles.

| | |
|---|---|
| tensile strength | 171 Mpa (1,740 kg/cm²) |
| heat distortion temperature | 231°C |

### Example 2:

40% by weight of copolyamide having a relative viscosity of 2.8 which was obtained by copolymerizing an equivalent salt formed from hexamethylene diamine and terephthalic acid, with an equivalent salt formed from hexamethylene diamine and adipic acid (nylon 66/6T), 50% by weight of nylon 6.10 having a relative viscosity of 2.7 and 10% by weight of poly (2,6-dimethyl-1,4-phenylene ether) were mixed. 55 parts by weight of chopped strands of glass fibre were added to 100 parts by weight of the mixture and after melt kneading the mixture under the same conditions as those of Example 1, a top and a base of a heater core tank and dumb-bell specimens were obtained by injection mouldings of the blends.

The physical properties of specimens which were absolutely dried were as follows, proving that they were highly useful mouldings excellent in thermal resistance, rigidity, toughness and so on.

| | |
|---|---|
| tensile strength | 182 Mpa (1,860 kg/cm²) |
| flexural strength | 270 Mpa (2,750 kg/cm²) |
| flexural modulus of elasticity | 8875 Mpa (90,500 kg/cm²) |
| Izod impact strength | 147 J/m (15 kg.cm/cm) |
| | notched |
| heat distortion temperature | 232°C |
| water absorption | 0.6% |

The obtained top and base of the heater core tank were subjected to a cycle test on the calcium chloride resistance thereof as described above. No crazing was observed until 60 cycles, thus confirming that the mouldings were automobile parts having an excellent road antifreezing agent resistance and heating-cooling repeat resistance.

### Comparative Example 3:

55 parts by weight of glass fibre were mixed into 100 parts by weight of the mixture of 50% by weight of the copolyamide as used in Example 2 and 50% by weight of nylon 6.10. A top and a base of a heater core tank were moulded in the same manner as those of Example 2.

The top and the base of the heater core tank were subjected to a cycle test on the calcium chloride resistance thereof as described above. Crazing occurred over the surface of the shaped articles after 10 cycles.

### Example 3:

45 parts by weight of chopped strands of glass fibre were mixed into 100 parts by weight of a mixture of 50% by weight of the copolyamide as used in Example 2, 35% by weight of nylon 6.12 having a relative viscosity of 2.7 and 15% by weight of poly(2,6-dimethyl-1,4-phenylene ether) as used in Example 1. After the mixture was kneaded by an extruder in the same manner as in Example 1, a cylinder head cover with a box shape and dumb-bell specimens were moulded by injection moulding.

The physical properties of the specimens which were absolutely dried were as follows, proving that they had excellent properties of toughness, thermal resistance and rigidity.

| | |
|---|---|
| tensile strength | 173 Mpa (1,760 kg/cm²) |
| flexural strength | 260 Mpa (2,650 kg/cm²) |
| flexural modulus of elasticity | 7845 Mpa (80,000 kg/cm²) |
| Izod impact strength | 157 J/m (16 kg.cm/cm) |
| | notched |
| heat distortion temperature | 210°C |
| water absorption | 0.7% |

The obtained cylinder head cover was subjected to a cycle test on its calcium chloride resistance as described above. No crazing was observed until 60 cycles, thus confirming that it was an automobile part having an excellent road antifreezing agent resistance and heating-cooling repeat resistance.

### Example 4:

45% by weight of copolyamide having a relative viscosity of 2.9 which was obtained by copolymerizing of a polyamide made from an equivalent salt of hexamethylene diamine and isophthalic acid and nylon 66, 45% by weight of nylon 6.10 and 10% by weight of poly(2,6-dimethyl-1,4-phenylene ether) as used in Example 1 were mixed.

15 parts by weight of chopped strands of glass fibre were added to 100 parts by weight of the mixture and after kneading the mixture under the same conditions as those of Example 1, a cooling fan was moulded by injection moulding.

The cooling fan was subjected to a cycle test on its calcium chloride resistance, and no crazing was observed until 60 cycles, thus confirming that the cooling fan was an automobile part having an excellent road antifreezing agent resistance and a heating-cooling repeat resistance.

### Examples 5 to 8:

The same operations as those of Example 1 were carried out except for changing the kinds and amounts of the inorganic reinforcement and the amounts of poly(2,6-dimethyl-1,4-phenylene ether).

The road antifreezing agent resistance and the heating-cooling repeat resistance of the obtained automobile exterior parts were evaluated and the results are shown in Table 1.

It was confirmed that in all of the cases in Table 1, the polyamide resin shaped articles were excellent.

**Table 1**

| Example: | 5 | 6 | 7 | 8 |
|---|---|---|---|---|
| Nylon component (a) | 66 | N66/6T | 6 | N66/6T |
| (rel. viscosity) | (2.9) | (2.8) | (2.9) | (2.8) |
| (amt.: wt.%) | (50) | (45) | (40) | (55) |
| Nylon component (b) | 6·12 | 6·10 | 6·10 | 11 |
| (rel. viscosity) | (2.9) | (2.7) | (2.7) | (2.5) |
| (amt.: wt.%) | (40) | (40) | (45) | (30) |
| Component (c) - poly (2, 6-dimethyl-1,4-phenylene ether (amt.:wt.%) | PPO (10) | PPO (15) | PPO (15) | PPO (15) |
| Inorganic reinforcement | glass fiber (35) | glass fiber (35) | glass fiber (55) | glass fiber (65) |
| (amt.: part by weight/100 parts of resin) | wollastonite (25) | talc (25) | | |
| Tensile strength | 142 | 143 | 179 | 177 |
| Mpa (kg/cm²) | (1,450) | (1,460) | (1,830) | (1,800) |
| Flexural strength | 226 | 221 | 260 | 230 |
| Mpa (kg/cm²) | 2,300 | 2,250 | 2,650 | 2,350 |
| Flexural modulus of elasticity 9pa(kg/cm²) | 7.4 (75,000) | 7.3 (74,000) | 8.4 (86,000) | 8.8 (90,000) |
| Izod impact strength J/m(kg·cm/cm) notched | 108 (11) | 118 (12) | 147 (15) | 147 (15) |
| Heat distortion temperature (° C) | 210 | 210 | 215 | 228 |
| Heat cycle resistance (number of cycles until crazing occurs) | >45 | >50 | >60 | >40 |

### Example 9:

45% by weight of nylon 6 having a relative viscosity of 3.6 and 55% by weight of nylon 6.10 having a relative viscosity of 2.7 were homogeneously mixed, melt kneaded, pelletized and dried. 100 parts by weight of the obtained pellets and 33 parts by weight of poly(2,6-dimethyl-1,4-phenylene ether) were melt kneaded by an extruder with a cylinder diameter of 50 mm and pelletized.

The obtained pellets were dried in vacuum, and then moulded by a tubing moulder having a cylinder temperature of 250°C to obtain a tube having an outer diameter of 10mm and an inner diameter of 9 mm.

The tube was subjected to cycle test on its calcium chloride resistance as in Example 1. No crazing was observed until 40 cycles, thus confirming that the tube had an excellent road antifreezing agent resistance.

## Claims

1. A polyamide resin composition comprising:
(a) 5 to 65% by weight of at least one polyamide resin selected from a polyamide having caproamide units, a polyamide having hexamethylene adipamide units and a polyamide having aromatic rings;
(b) 65 to 30% by weight of a higher polyamide resin which is obtained by melt polymerisation of at least one compound selected from an aliphatic amino acid having 11 or 12 carbon atoms, a lactam having 11 or 12 carbon atoms and an equivalent salt having 13 to 24 carbon atoms formed from an aliphatic diamine having 6 to 12 carbon atoms and an aliphatic dicarboxylic acid having 6 to 12 carbon atoms;
(c) 30 to 5% by weight of a polyphenylene oxide represented by formula I, or a modified polyphenylene oxide produced by graft-polymerisation of a polyphenylene oxide of formula I with a compound having an active group, or produced by co-polymerising a polyphenylene oxide of formula I with a minor amount of another polymer; 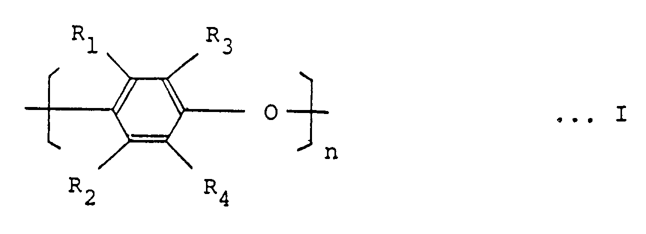 wherein each of R₁ to R₄ is hydrogen or an alkyl group having 1 to 4 carbon atoms, and
(d) 1 to 200 parts by weight of an inorganic reinforcement per 100 parts by weight of the mixture of components (a), (b)and (c).

2. A polyamide resin composition according to claim 1, wherein the portions of the components (a) to (c) are 25 to 55% by weight, 55 to 40% by weight and 20 to 5% by weight, respectively.

3. A polyamide resin composition according to claim 1 or claim 2 wherein the polyamide resin of the component (a) is selected from nylon 6, nylon 66, nylon 6T, nylon 66/6T, nylon 6I, nylon 66/6I, nylon 6/6T and nylon 6/6I.

4. A polyamide resin composition according to any one of the preceding claims, wherein the polyamide resin of the component (b) is selected from nylon 11, nylon 12, nylon 6.10, nylon 6.12 and nylon 11.6.

5. A shaped article composed of a polyamide resin composition as claimed in any one of claims 1 to 4.

6. A shaped article according to claim 5 wherein the shaped article is moulded by means of an extrusion moulding or an injection moulding.

7. A shaped article according to claim 5 or claim 6 and which is in the form of a part for an automobile.

## Patentansprüche

1. Polyamidharzmischung, welche umfaßt:
(a) 5 bis 65 Gew.-% von mindestens einem Polyamidharz, das aus Polyamid mit Caproamid-Einheiten, einem Polyamid mit Hexamethylenadipamid-Einheiten und einem Polyamid mit aromatischen Ringen ausgewählt ist;
(b) 65 bis 30 Gew.-% eines höheren Polyamidharzes, das durch Schmelzpolymerisation von mindestens einer Verbindung erhalten wird, die aus einer aliphatischen Aminosäure mit 11 oder 12 Kohlenstoffatomen, einem Lactam mit 11 oder 12 Kohlenstoffatomen und einem äquivalenten Salz mit 13 bis 24 Kohlenstoffatomen ausgewählt ist, das aus einem aliphatischen Diamin mit 6 bis 12 Kohlenstoffatomen und einer aliphatischen Dicarbonsäure mit 6 bis 12 Kohlenstoffatomen gebildet wird;
(c) 30 bis 5 Gew.-% Polyphenylenoxid der Formel I oder eines modifizierten Polyphenylenoxids, das durch Pfropfpolymerisation von Polyphenylenoxid der Formel I mit einer Verbindung mit einer aktiven Gruppe hergestellt wurde oder durch Copolymerisation eines Polyphenylenoxids der Formel I mit einer geringen Menge eines anderen Polymers hergestellt wurde; 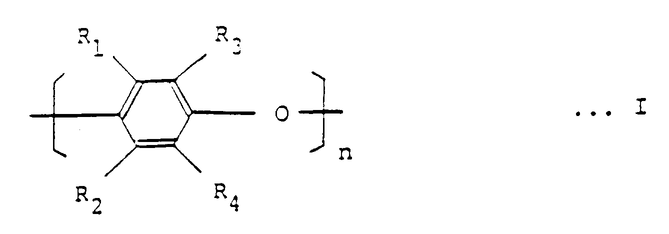 worin jedes R₁ bis R₄ Wasserstoff oder eine Alkylgruppe mit 1 bis 4 Kohlenstoffatomen ist; und
(d) 1 bis 200 Gew.-Teile eines anorganischen Verstärkungsmaterials pro 100 Gew.-Teile der Mischung der Komponenten (a), (b) und (c).

2. Polyamidharzmischung nach Anspruch 1, wobei die Anteile der Komponenten (a) bis (c) 25 bis 55 Gew.-%, 55 bis 40 Gew.-% bzw. 20 bis 5 Gew.-% betragen.

3. Polyamidharzmischung nach Anspruch 1 oder 2, wobei das Polyamidharz der Komponente (a) aus Nylon 6, Nylon 66, Nylon 6T, Nylon 66/6T, Nylon 6I, Nylon 66/6I, Nylon 6/6T und Nylon 6/6I ausgewählt ist.

4. Polyamidharzmischung nach einem der vorstehenden Ansprüche, wobei das Polyamidharz der Komponente (b) aus Nylon 11, Nylon 12, Nylon 6.10, Nylon 6.12 und Nylon 11.6 ausgewählt ist.

5. Geformter Gegenstand, der aus der Polyamidharzmischung nach einem der Ansprüche 1 bis 4 besteht.

6. Geformter Gegenstand nach Anspruch 5, wobei dieser geformte Gegenstand durch Strangpressen oder Spritzgießen hergestellt wird.

7. Geformter Gegenstand nach Anspruch 5 oder 6, der in Form eines Teils für ein Kraftfahrzeug vorliegt.

## Revendications

1. Composition de résine polyamide comprenant :
(a) 5 à 65 % en poids d'au moins une résine de polyamide choisi parmi un polyamide ayant des unités caproamide, un polyamide ayant des unités hexaméthylèneadipamide et un polyamide ayant des cycles aromatiques ;
(b) 65 à 30 % en poids d'une résine de polyamide supérieur qui est obtenu par polymérisation à l'état fondu d'au moins un composé choisi parmi un aminoacide aliphatique ayant 11 ou 12 atomes de carbone, un lactame ayant 11 ou 12 atomes de carbone et un sel équivalent ayant de 13 à 24 atomes de carbone formé à partir d'une diamine aliphatique ayant de 6 à 12 atomes de carbone et d'un acide dicarboxylique aliphatique ayant de 6 à 12 atomes de carbone ;
(c) 30 à 5 % en poids d'un polyphénylène-oxyde représenté par la formule I, ou un polyphénylène-oxyde modifié produit par polymérisation séquencée (en anglais : "graft-polymerisation") d'un polyphénylène-oxyde de formule I avec un composé ayant un groupe actif, ou produit par copolymérisation d'un polyphénylène-oxyde de formule I avec une quantité moindre d'un autre polymère, ladite formule I étant la suivante ; 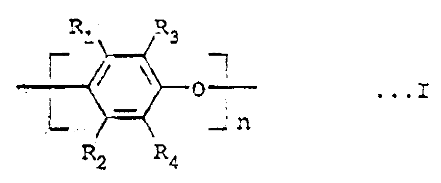 dans laquelle chacun des R₁ à R₄ est l'hydrogène ou un groupe alkyle ayant de 1 à 4 atomes de carbone ; et,
(d) 1 à 200 parties en poids d'un agent de renforcement minéral pour 100 parties en poids du mélange des composants (a), (b) et (c).

2. Composition de résine polyamide suivant la revendication 1, dans laquelle les proportions des composants (a) à (c) sont de 25 à 55 % en poids, de 55 à 40 % en poids et respectivement de 20 à 5 % en poids.

3. Composition de résine polyamide suivant la revendication 1 ou la revendication 2, dans laquelle la résine de polyamide du composant (a) est choisie parmi les nylon 6, nylon 66, nylon 6T, nylon 66/6T, nylon 6I, nylon 66/6I, nylon 6/6T et nylon 6/6I.

4. Composition de résine polyamide suivant l'une quelconque des revendications précédentes, dans laquelle la résine de polyamide du composant (b) est choisie parmi les nylon 11, nylon 12, nylon 6.10, nylon 6.12 et nylon 11.6.

5. Article formé composé d'une composition de résine polyamide telle que revendiquée dans l'une quelconque des revendications 1 à 4.

6. Article formé suivant la revendication 5, dans lequel ledit article est moulé par extrusion/moulage ou injection/moulage.

7. Article formé suivant la revendication 5 ou la revendication 5, se présentant sous la forme d'une partie d'automobile
